# EUROPEAN PATENT APPLICATION

(11) **EP 1 610 506 A1**
(43) Date of publication of application: **28.12.2005**
(21) Application number: 04793311.4
(22) Date of filing: 27.10.2004
(51) Int. Cl.: H04L 12/56

(54) **ADDRESS INFORMATION SETTING METHOD AND MOBILE TERMINAL**

(30) Priority: 28.10.2003 JP 2003367072; 25.10.2004 JP 2004309410
(71) Applicant: MATSUSHITA ELECTRIC INDUSTRIAL CO., LTD., Kadoma-shi, Osaka 571-8501 (JP)
(72) Inventor: IKEDA, Shinkichi, Kanagawa 224-0006 (JP)
(74) Representative: Balsters, Robert
(86) International application number: PCT/JP2004/016278
(87) International publication number: WO 2005/041501

(57) **Abstract**

The invention provides an address information setting method such that when home agent information such as an address of a home agent, which is basic information for activating mobile IP protocol processing, is acquired, it is made possible to perform communication that satisfies requirements desired by a user or an application by starting mobile IP protocol processing using home agent information acquired according to an instruction of a user. In addition, it is possible to reduce the work burden on a user for making settings and provide a mobile terminal with high convenience by automatically acquiring home agent information on a link at a time specified by the user.

## Description

### Technical Field

The present invention relates to an address information setting method for a mobile terminal, which carries out an Internet protocol, in particular, a mobile IP procedure, and the mobile terminal.

### Background Art

Mobile IP is one of methods for mobility management in the Internet system. The Mobile IPv4 is standardized by the RFC3220 (IP Mobility Support). The Mobile IPv6 is still being standardized in the Internet draft draft-ietf-mobileip-ipv6 (Mobility Support in IPv6). These protocols allow a mobile terminal to perform communication using the same address even when the mobile terminal moves among different networks.

In the Mobile IPv6, when a mobile terminal has moved away from a home link, the mobile terminal acquires prefix information of the link to which the mobile terminal has connected, from network information transmitted by an access router apparatus of the link, and thereby generates a care-of address that the mobile terminal uses in the link temporarily. Thereafter, the mobile terminal transmits a binding update message to a home agent to register the care-of address as the primary care-of address to the home agent which has home link for the mobile terminal. After receiving the binding update message from the mobile terminal, the home agent creates or updates a binding cache entry that associates a home address and the care-of address.

The home agent refers to the binding cache, and receives as a proxy a packet which has been transmitted to the home address of the mobile terminal. Then, the home agent encapsulates the packet received and transfers the encapsulated packet to the care-of address of the mobile terminal. The mobile terminal decapsulates the packet transferred by the home agent and extracts the packet addressed to the home address of the mobile terminal.

Conventionally, as a setting method for a mobile terminal in this field, for example, there is a setting method described in JP-2000-22708.

Fig. 17 is a diagram of a conventional mobile terminal described in JP-2000-22708.

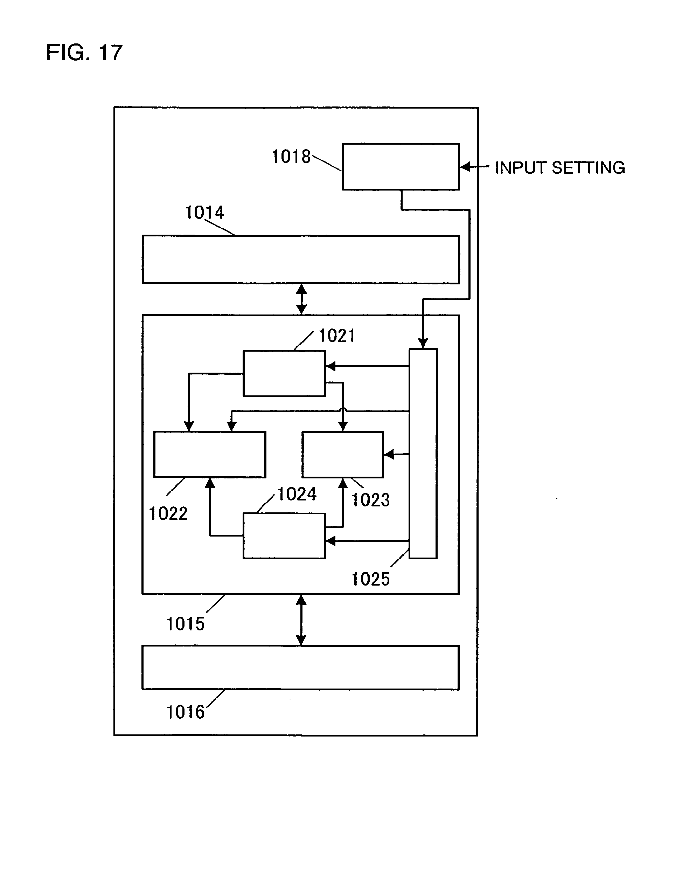

In Fig. 17, a mobile IP managing unit 1025 determines whether the module shall be worked, in accordance with an instruction from an instruction interface 1018. In other words, when the mobile IP managing unit 1025 receives a setting input by a user through the instruction interface 1018, operation of the mobile IP processing unit 1015 is enabled. Thus, An address converting unit 1023 changes the transmission source address of a transmitted packet to be transferred to a device driver 1016 by an IP processing unit 1014, or an encapsulation processing unit 1022 applies encapsulation processing to this transmitted packet. In addition, the address converting unit 1023 changes the destination address of a received packet transferred from the device driver 1016 to the IP processing unit 1014, or the encapsulation processing unit 1022 applies decapsulation processing to this received packet. Moreover, the mobile IP managing unit 1025 controls an input switch 1021 or an output switch 1024 to thereby decide whether transmitted/received packets are passed through the address converting unit 1023 or through the encapsulation processing unit 1022. This makes it possible to realize a mobile IP function without changing the existing IP processing unit 1014.

However, in order to activate mobile IP protocol processing, it is necessary to set information, such as the address of a home agent or home address in the mobile terminal by some means.

For this purpose, there is a method by which a mobile terminal acquires information on a home agent from a DHCP server on a network using DHCP (Dynamic Host Configuration Protocol) , which is a general protocol for allocating an IP address to a mobile terminal and notifying the mobile terminal of information on network servers and the like. When the mobile terminal acquires the information regarding the home agent from the DHCP server, the mobile terminal automatically sets the information as parameters of the mobile IP protocol and starts protocol processing.

However, in the conventional method of acquiring and setting home agent information using DHCP, a problem described below occurs in an environment in which the mobile terminal can arbitrarily select the home agent to which it will belong, from among plural home agents.

In general, a mobile IP service is provided in an office together with a VPN (Virtual Private Network). Only employees are permitted to access a company network from locations outside the company such as business trip destinations and homes of the employees. Terminals of the employees are managed with one IP address (home address) for each. Consequently, the mobile IP service realizes improvement of operating effectiveness while keeping security of communication. Therefore, the home agent is arranged together with a VPN gateway function, and a communication path between the home agent and the terminal is protected by a high security system consisting of strict authentication and powerful encryption. On the other hand, since it is important to attain improvement of user traffic processing efficiency with respect to managing of plural terminals, a home agent provided by an ISP performs encryption of a control message for binding update and the like but does not always perform encryption of user data. Under such circumstances, when a user attempts to transmit an important business file to a company by electronic mail from a public network such as a hot spot that the user calls on at a business trip destination, home agent information is automatically acquired using DHCP from the ISP to which the user has the subscription soon after the terminal to be connected to the network. Therefore, business data whose confidentiality must be secured is sent onto the public network in an unencrypted state. This may lead to a significant loss for security.

### Disclosure of the Invention

It is an object of the invention to provide an address information setting method that makes it possible to choose communication environments that satisfies requirements desired by a user or an application when home agent information such as an address of a home agent, which is basic information for activating mobile IP protocol processing, is acquired. It is another object of the invention to reduce the work burden on the user for making settings and provide a mobile terminal with high convenience.

The invention provides an address information setting method for a mobile terminal that carries out a mobile IP procedure. The address information setting method separates the acquisition operation for home agent information and the setting operation for home agent information, judges after the acquisition operation whether protocol processing shall be made to reflect the acquired information, and causes the mobile terminal to start the setting operation according to the result of the judgment. In addition, the address information setting method is constituted so that in response to a trigger given by a user, search is made, from among the routers on the links to which the mobile terminal is connected at that time, for the home agent to be assigned to that mobile terminal, the address of the home agent is stored, and an address generated from a prefix distributed by the selected home agent is stored as the home address.

This makes it possible for the mobile terminal to be assigned the home agent chosen by the user from among plural home agents after basic information required for carrying out a mobile IP protocol is acquired. It is also possible to acquire and set address information at a time designated by the user to reduce the work burden of manual setting by the user and improve the convenience of the mobile terminal.

An address information setting method according to a first aspect of the invention includes: a step of detecting a trigger from a user; a step, performed after the trigger is detected, of selecting a home agent to manage a mobile terminal from among routers to which the mobile terminal is connected ; a step of generating a home address from the prefix distributed by the selected home agent; and a step of carrying out a mobile IP procedure using the selected home agent and the generated home address.

This makes it possible to automatically acquire and set basic information which is required for carrying out a mobile IP protocol, at the time designated by the user, thereby reducing the work burden of manual setting by the user and improving convenience.

An address information setting method according to a second aspect of the invention further includes a step of acquiring, when the trigger is detected, router information from a network to which the mobile terminal is connected.

This makes it possible to perform accurate information setting on the basis of router information collected on a real time basis.

In an address information setting method according to a third aspect of the invention, a home agent is selected from among routers whose flag indicating that it is a home agent is on, this flag included in acquired information regarding the routers.

This makes it possible to secure compatibility with the conventional system utilizing existing information, and improve communication efficiency by selecting a home agent suitable for the application or the like being run on the mobile terminal.

In an address information setting method according to a fourth aspect of the invention, in the selection of a home agent, from among the routers whose flag is on, a predetermined number of routers are selected according to a preferenceing defined in advance, in order from the one with highest priority.

This makes it possible to secure compatibility with the conventional system and, in selecting a home agent, realize optimization of system processing load distribution by referring to priority information that the home agents set taking into account their processing loads.

In an address information setting method according to a fifth aspect of the invention, a home agent is selected arbitrarily from among the routers whose flag is on. This makes it possible to eliminate an increase in load caused when one home agent manages a large number of mobile terminals, instead assigning an equal number of mobile terminals to all home agents, which makes it possible to optimize the load of the entire system.

An address information setting method according to a sixth aspect of the invention further includes a step of acquiring from the user selection criteria for selecting a home agent from among the routers whose flag is on. In the step of selecting a home agent, the home agent is selected according to these criteria. This makes it possible to select a home agent according to the preferences of the user of the mobile terminal.

An address information setting method according to a seventh aspect of the invention further includes a step of notifying the user when the selection of a home agent is completed. This makes it possible to relax limitations on movements of the user by notifying the user that information setting is completed.

In an address information setting method according to an eighth aspect of the invention, the selection of a home agent is performed using router information acquired during a time period designated by the user. Since the user designates the period in which the information setting is carried out, it is possible to relax limitations on movements of the user which are present in the case where the information setting period is uncertain.

A mobile terminal according to a ninth aspect of the invention includes: an input unit through which a user inputs a trigger for setting information regarding a home agent; an information setting unit that selects a home agent to manage the mobile terminal from among the routers to which the mobile terminal is connected when the mobile terminal receives the trigger, and sets the address of that home agent and the home address, which are generated from a prefix distributed by the home agent, as information regarding the home agent; and mobile IP processing means that carries out a mobile IP procedure using the information regarding the home agent.

This makes it possible to automatically acquire and set basic information which is required for carrying out the mobile IP protocol, at a time designated by the user to eliminate the burden of manual setting by the user and improve convenience.

A mobile terminal according to a tenth aspect of the invention includes: a transmission unit that, when a trigger from the input unit is received, transmits a router information request message for requesting router information from a network to which the mobile terminal is connected; and a receiving unit that receives router information response messages that are responses to the router information request message. The information setting unit selects a home agent to manage the mobile terminal from among the routers that have transmitted the router information response messages.

This makes it possible to perform accurate information setting on the basis of router information collected on a real time basis.

In a mobile terminal according to an eleventh aspect of the invention, the information setting unit selects a home agent from among routers whose flag, indicating that the router is a home agent included in the router information of the router information response messages, is on.

This makes it possible to secure compatibility with the conventional system by utilizing existing information and improve communication efficiency by selecting a home agent suitable for the application or the like being run on the mobile terminal.

In a mobile terminal according to a twelfth aspect of the invention, the information setting unit selects, from among the routers whose flag is on, a predetermined number of routers according to a preference defined in advance, in order from the one with highest priority.

This makes it possible to secure compatibility with the conventional system by utilizing existing priority information and optimize system processing load in selecting a home agent, by referring to selection priority information that is set taking into account the processing load of the mobile terminals.

In a mobile terminal according to a thirteenth aspect of the invention, the information setting unit selects a home agent arbitrarily from among the routers whose flag is on. This makes it possible to eliminate an increase in a load, which is caused when one home agent manages a large number of mobile terminals, assigning an equal number of mobile terminals to all home agents and thus making it possible to optimize the load of the entire system.

In a mobile terminal according to a fourteenth aspect of the invention, through an input unit the user enters selection criteria for the selection of a home agent to be performed by the information setting unit, and the information setting unit performs the selection of a home agent on the basis of these criteria. This makes is possible to select a home agent according to the preferences of the user of the mobile terminal.

In a mobile terminal according to a fifteenth aspect of the invention includes, the input unit may be a soft key on a screen, a button set in a main body, or a switch set in the main body. This allows the user to make the timing setting conveniently.

A mobile terminal according to a sixteenth aspect of the invention further includes a display unit that notifies the user that the setting of information on a home agent is completed. This makes it possible to relax limitations on movements of the user by notifying the user that information setting is completed.

In a mobile terminal according to a seventeenth aspect of the invention, the input unit designates the time period in which the information on a home agent is set, and the information setting unit performs settings relating to the home agent only in this period. Since the user designates a period in which information setting is carried out, it possible to relax limitations on movements of the user which are present in the case where the information setting period is uncertain.

In a mobile terminal according to an eighteenth aspect of the invention, the time period is a period in which the soft key, the button, or the switch used as the input unit is in the state 'ON'. Since the user designates the period in which information setting is carried out, it is possible to relax limitations on movements of the user which are present in the case where the information setting period is uncertain.

As described above, according to the address information setting method of the invention, it is possible to perform communication that satisfies requirements desired by the user or the application, when home agent information such as the address of a home agent, which is basic information for activating mobile IP protocol processing, is received. In addition, the work burden on the user for making settings is reduced and convenience is improved.

### Brief Description of the Drawings

Fig. 1 is a diagram showing a first constitution of a mobile terminal according to a first embodiment of the invention.
Fig. 2 is a diagram showing a second constitution of the mobile terminal according to the first embodiment of the invention.
Fig. 3 is a flowchart showing a first operation of the mobile terminal according to the first embodiment of the invention.
Fig. 4 is a flowchart showing a second operation of the mobile terminal according to the first embodiment of the invention.
Fig. 5 is a diagram showing a first constitution of a mobile communication system in the first embodiment of the invention.
Fig. 6 is a diagram showing a second embodiment of the mobile communication system in the first embodiment of the invention.
Fig. 7 is a diagram showing a constitution of an information memory area included in the mobile terminal according to the first embodiment of the invention.
Fig. 8 is a diagram showing a first constitution of a router list in the first embodiment of the invention.
Fig. 9 is a diagram showing a second constitution of the router list in the first embodiment of the invention.
Fig. 10 is a diagram showing a format of a router advertisement message in the first embodiment of the invention.
Fig. 11 is a diagram showing a first user interface constitution of the mobile terminal according to the first embodiment of the invention.
Fig. 12 is a diagram showing a second user interface constitution of the mobile terminal according to the first embodiment of the invention.
Fig. 13 is a diagram showing a third user interface constitution of the mobile terminal according to the first embodiment of the invention.
Fig. 14 is a flowchart showing a third operation of the mobile terminal according to the first embodiment of the invention.
Fig. 15 is a diagram showing a fourth user interface constitution of the mobile terminal according to the first embodiment of the invention.
Fig. 16 is a diagram showing a fifth user interface constitution of the mobile terminal according to the first embodiment of the invention.
Fig. 17 is a diagram of the conventional mobile terminal.

### Best Mode for carrying out the Invention

Embodiments of the invention will be hereinafter explained using the drawings.

### 1st embodiment

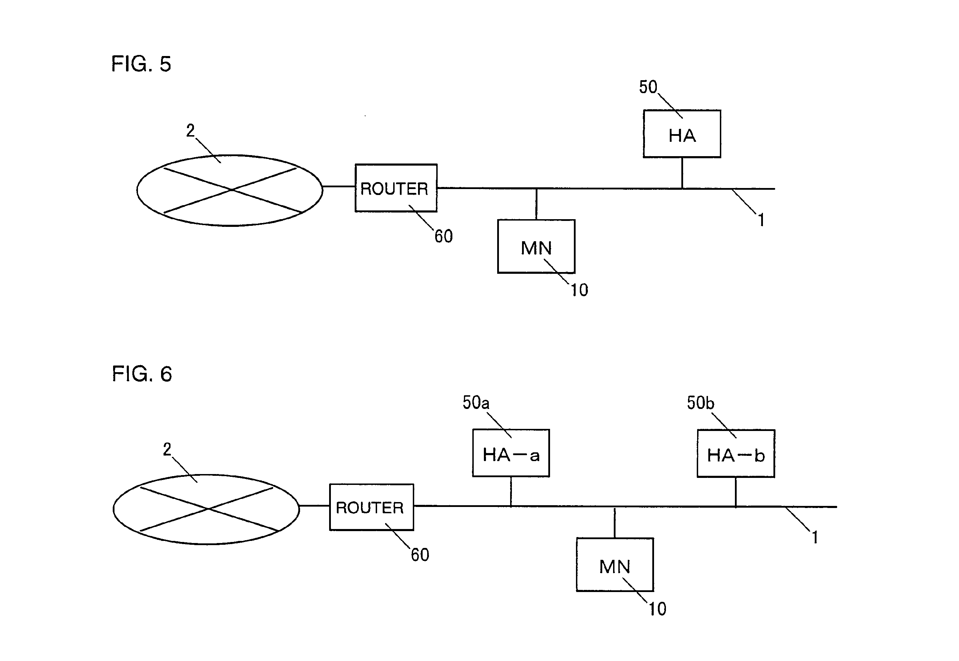

Figs. 5 and 6 are diagrams of a mobile communication system according to the invention.

In Figs. 5 and 6, a link 1, to which a mobile terminal (MN) 10 and a home agent (HA) 50 are connected, is connected to a network 2 via a router 60.

Note that Figs. 5 and 6 are different in that, whereas one home agent 50 is connected to the link 1 in Fig. 5, two home agents 50a and 50b are connected to the link 1 in Fig. 6.

In an embodiment of the invention, in a state in which the mobile terminal 10 is connected to the link 1, in response to a trigger given through a user interface, the mobile terminal 10 recognizes that the link to which it is connected is its home link and sets the home agent 50 connected to the link 1 as the home agent for the mobile terminal 10. The mobile terminal 10 stores an IP address which is generated from a network prefix distributed by the home agent 50, as its home address. After that, the mobile terminal 10 activates mobile IP protocol processing referring to the information set before.

When home agent information is successfully acquired according to DHCP or the like, a user judges whether the protocol processing shall reflect this information or not. This makes it possible for the mobile terminal 10 to belong to a home agent that realizes a communication environment desired by the user or an application.

First, a method of acquiring home agent information upon receiving a trigger issued by the user will be explained.

In the mobile communication system shown in Fig. 5, when the user using the mobile terminal 10 performs setting for mobile IP of the mobile terminal 10, the user gives an instruction to the mobile terminal 10 by, for example, depressing a button included in the mobile terminal 10, changing that switch to the state 'ON'. At this point, the mobile terminal 10 performs address information setting referring to a router list in which information on routers connected to the mobile terminal 10 is described.

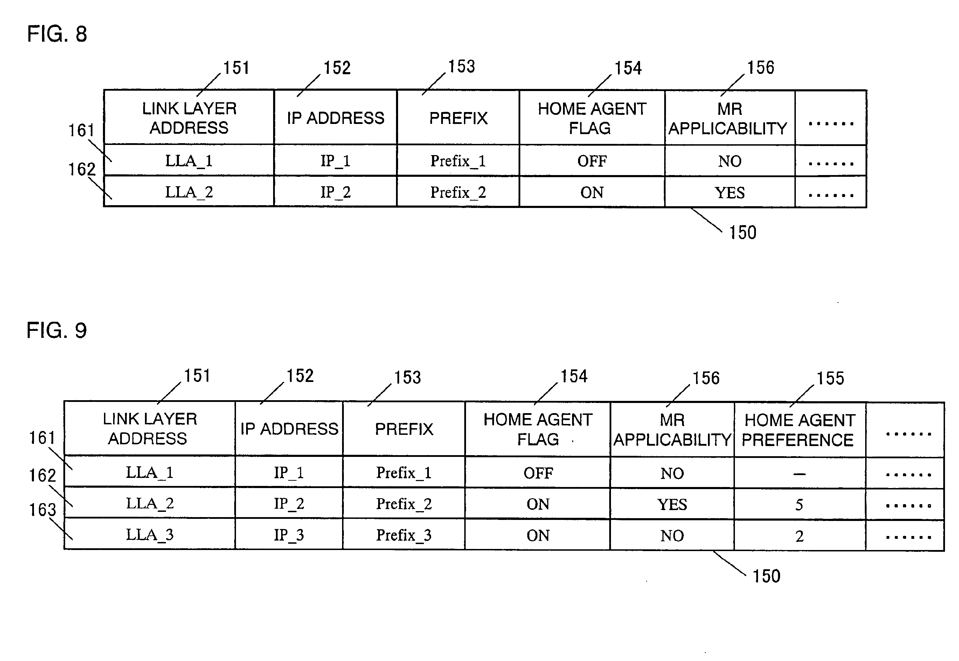

Fig. 8 is a diagram showing a constitution of the router list.

In Fig. 8, in a router list 150, at least a link layer address 151, an IP address 152, a prefix 153, and a home agent flag 154 are entered for each router. In the mobile terminal 10 connected to the mobile communication system shown in Fig. 5, two entries, namely, an entry 161 corresponding to the router 60 and an entry 162 corresponding to the home agent 50 are registered. The mobile terminal 10 selects a router corresponding to an entry 162 and whose home agent flag 154 is 'ON', as its home agent 50.

The mobile terminal 10 stores the IP address IP_2 of the selected home agent 50 as the address of the home agent 50, stores Prefix_2 as the prefix of the home link, and stores an IP address generated using the prefix Prefix_2 as the home address. After that, when the mobile terminal 10 carries out mobile IP protocol processing, the mobile terminal 10 refers to the IP address and the home address of the home agent 50 stored above.

In the mobile communication system shown in Fig. 6, the mobile terminal 10 has the router list 150 shown in Fig. 9. An entry 161 corresponding to the router 60, an entry 162 corresponding to a home agent 50a, and an entry 163 corresponding to a home agent 50b are registered in the router list 150. In this case, since plural home agents 50 are connected to the link 1, the mobile terminal 10 can determine whether all of these routers are selected, plural routers are selected, or one router is selected from among these routers.

When the mobile terminal 10 selects all the routers as its home agents, the mobile terminal 10 selects the entries 162 and 163 whose home agent flag 154 is ON. In other words, the mobile terminal 10 selects the home agents 50a and 50b as the home agents for the mobile terminal 10. The mobile terminal 10 stores IP addresses of the home agents 50a and 50b, the prefixes of the home links, and the home addresses, according to the procedure explained above.

When the mobile terminal 10 selects plural home agents, it is possible to select a more suitable home agent 50 by making it possible to further enter a home agent preference 155 in the router list 150. In other words, the mobile terminal 10 selects a home agent having a home agent preference equal to or higher than a fixed value. For example, when the mobile terminal 10 selects a home agent having a home agent preference equal to or higher than '1', the home agents 50a and 50b corresponding to the entries 162 and 163 are selected as home agents for the mobile terminal 10. Note however that the mobile terminal 10 may select plural home agents 50 at random, not referring to the home agent preference 155.

When the mobile terminal 10 selects one home agent, the mobile terminal 10 uses the home agent preference 155 in the same manner. For example, the home agent preference 155 indicates a preference in selecting the home agent 50 for the mobile terminal 10. The home agent preference 155 is set in accordance with the state of processing load, apparatus performance, the preferences of the administrator, and/or the like. The mobile terminal 10 selects the home agent 50a corresponding to the entry 162 which has the highest home agent preference as its home agent. Note that the mobile terminal 10 may assign its home agent 50 at random, not referring to home agent preference.

The mobile terminal 10 may acquire router information from the router 60 and the home agent 50 connected to the link 1 after receiving a trigger from the user. In other words, the mobile terminal 10 transmits one or more router solicitation messages for acquiring router information to the link 1, and receives router advertisement messages 200 that is transmitted from the router 60 and the home agent 50 connected to the link 1 as a response to the router solicitation messages. Subsequently, the mobile terminal 10 updates the router list 150 and carries out processing for selecting a home agent by the same procedure as described above. Then, the mobile terminal 10 performs setting of a home link prefix and a home address. Note that the mobile terminal 10 may apply the above processing to individual messages received without performing update of the router list 150.

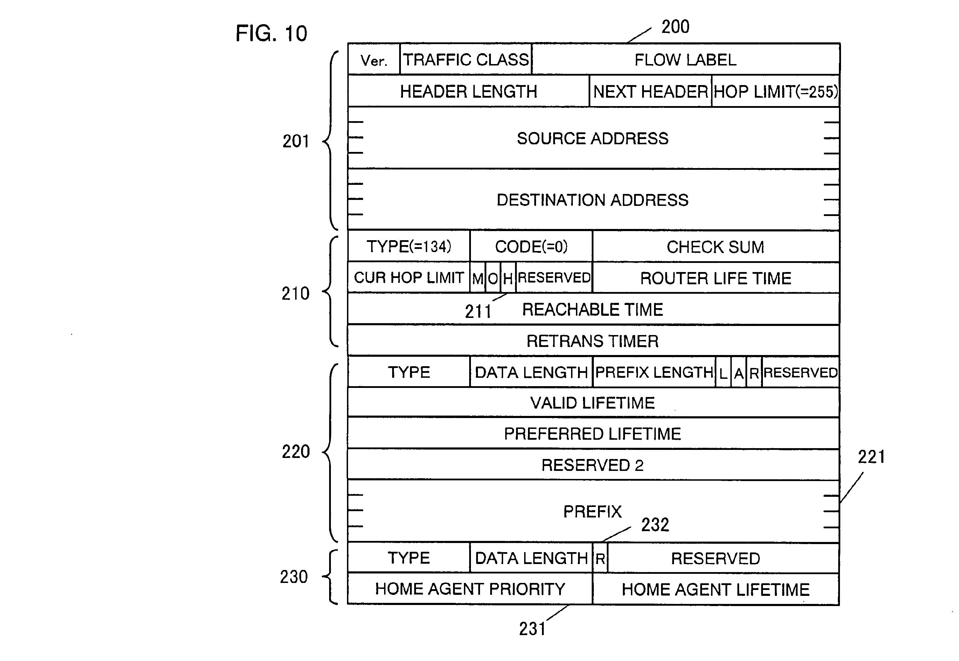

A basic constitution of the router advertisement message 200 is shown in Fig. 10.

Router information described in the router advertisement message 200 includes at least the information described in the router list 150 shown in Figs. 8 and 9 explained above. In other words, an H flag 211 of an ICMPv6 router advertisement 210 corresponds to the home agent flag 154, a prefix field 221 of a prefix information option 220 corresponds to the prefix 153 and the IP address 152, and a home agent preference field 231 of a home agent information option 230 corresponds to the home agent preference 155. Although not shown in the figure, it is possible to acquire a link layer address 151 by adding an option in which a link layer address is entered.

When the mobile terminal 10 operates as a mobile router, the mobile terminal 10 regards only home agents whose R flag 232 indicating that the home agent supports mobile routers is 'ON' in the router advertisement message 200 received, as objects of selection. Consequently, since a home agent not supporting mobile routers is never selected, re-search for a home agent is not performed. Since home agents selected support mobile routers, it is possible to prevent a packet from being lost during packet transmission or reception to and from a mobile terminal connected to a mobile network routed by the mobile router.

In this case, an MR (Mobile Router) Capability Column 156 may be provided in the router list 150 in order to distinguish a home agent supporting mobile routers and a home agent not supporting mobile routers. This makes it possible to reduce the processing work load of the home agent supporting mobile routers by switching connection to a home agent not supporting the mobile router function when the mobile router changes its operation to a simple mobile terminal later.

And when a home agent supporting mobile routers is assigned plural mobile routers , resources need not be allocated to those mobile routers, and it is possible to make use of the resources which are thereby freed by simple mobile terminals for the packet transfer or other operations for the mobile routers registered. This makes it possible for a home agent to process communication traffic for the mobile routers stably, which tends more than one for the simple mobile terminals.

Note that, in the embodiment described above, the setting method for responding to a trigger which is generated by depressing the button included in the mobile terminal 10 to bring the switch into the state 'ON' is explained. However, it is also possible to carry out the setting during the period in which the button is being depressed or the period in which the toggle switch is being in the state 'ON'. In particular, when the selection of a home agent and the setting for information regarding the home agent are performed merely using the router advertisement messages 200 received during the period, it is possible to make unnecessary a timer to set a waiting limit for completion of reception of the router advertisement messages 200, which is needed for the case in which the setting is performed in response to a trigger.

Next, a constitution and an operation of the mobile terminal 10 according to the invention will be explained using the drawings.

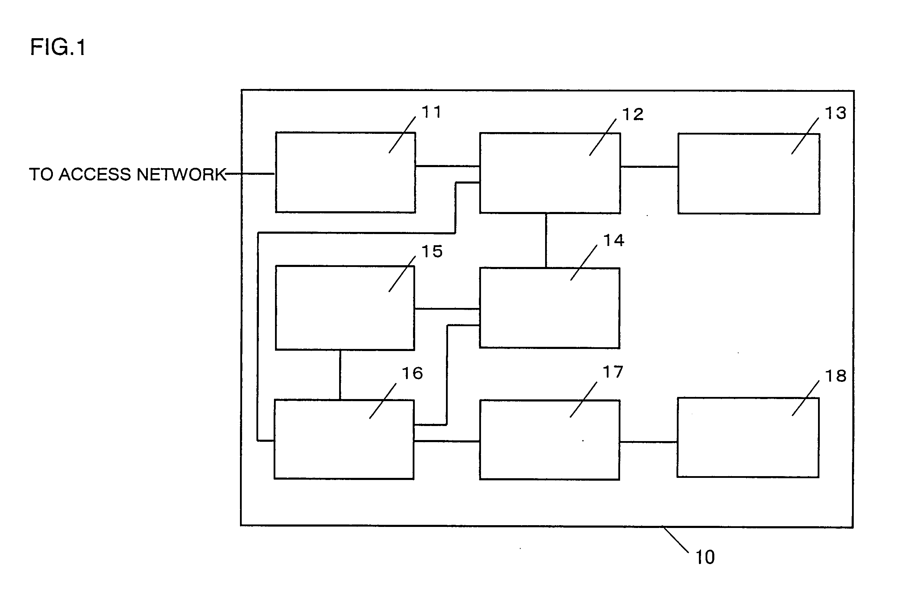

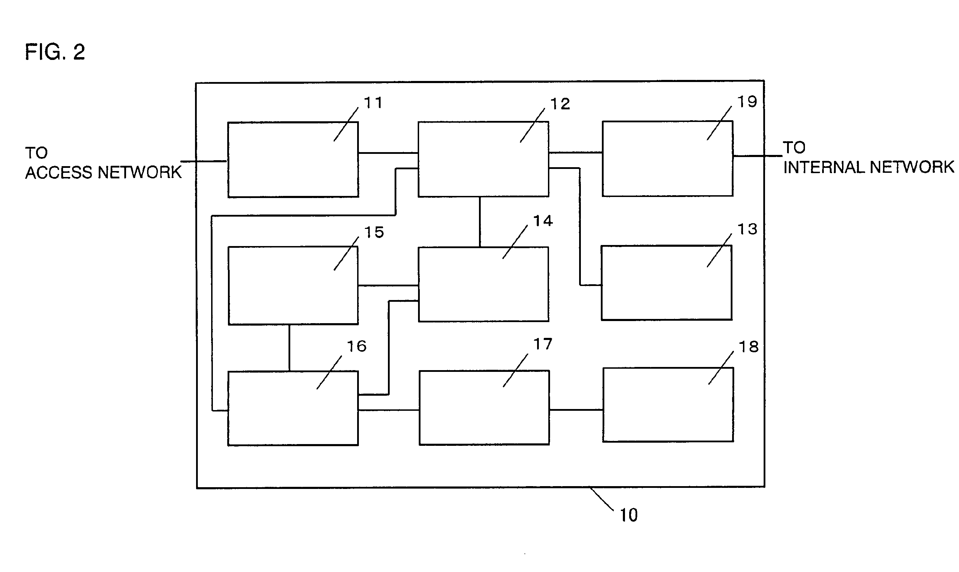

Figs. 1 and 2 are diagrams of the mobile terminal 10 according to the invention.

In Fig. 1, an L1/2 processing unit 11 transmits and receives frames to and from the link 1 and carries out processing of layer 1 and layer 2. An L3 processing unit 12 performs processing of layer 3, for example, Internet protocol (IP) processing. A higher layer processing unit 13 is higher in order than the layer 3 and performs control for applications, session management, and the like. Note that the L1/2 processing unit 11 corresponds to the transmission unit and the receiving unit in the invention.

A user judgment acquiring unit 17 acquires a trigger indicating information setting timing from a user interface unit 18. An information setting unit 16 performs control for setting information on the valid home agent in an information memory unit 15 in accordance with control by the user judgment acquiring unit 17. Note that the user interface unit 18 corresponds to the input unit and the display unit according to the invention.

A mobile IP processing unit 14 carries out standard mobile IP protocol processing in cooperation with the L3 processing unit using home agent information stored in the information memory unit 15.

The mobile terminal 10 shown in Fig. 2 further includes an L1/2 processing unit 19 rather than the L1/2 processing unit 11, and operates as a mobile router. Note that even the mobile terminal 10 may have a constitution including plural L1/2 processing units 11, 19 and more.

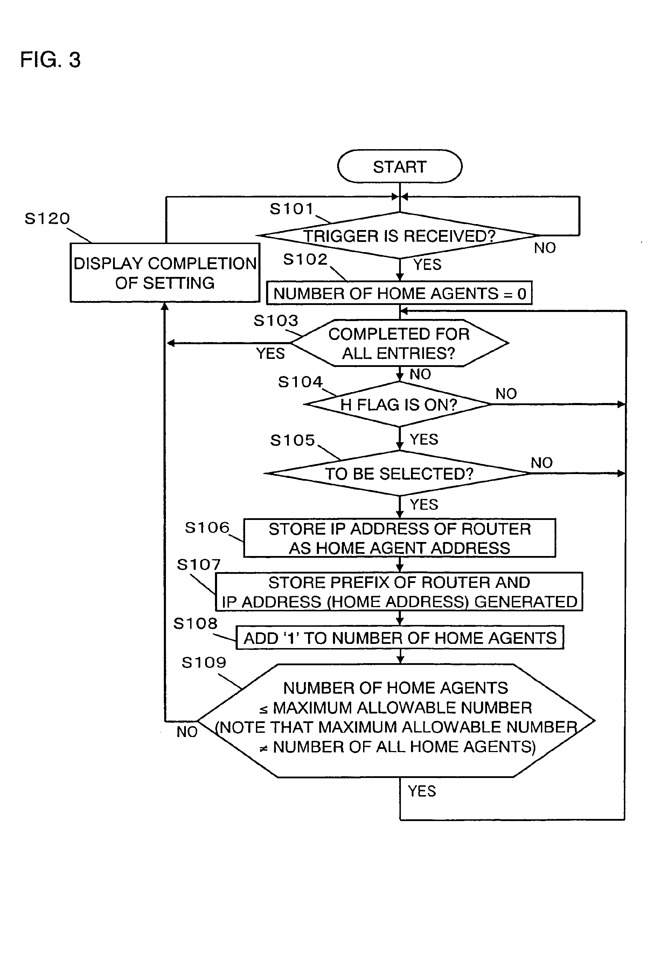

Processing for setting the valid home agent in the mobile terminal 10 constituted as described above will be explained in detail using Fig. 3. Note that the operation explained below is identical in both the mobile terminal shown in Fig. 1 and that in Fig. 2.

First, when a user depresses a setting button or the like, the user judgment acquiring unit 17 receives a trigger indicating setting timing from the user interface unit 18 (S101). Then, the user judgment acquiring unit 17 notifies the information setting unit 16 of the trigger.

The information setting unit 16 initializes a variable Count_HA with a value '0' which is for managing the number of home agents in the following processing (S102). Subsequently, the information setting unit 16 refers to a router list managed by the L3 processing unit 12 and performs the selection of the home agent 50 and the setting of information such as the home agent address, as follows. First, for respective entries registered in the router list 150 (S103), the information setting unit 16 checks whether the home agent flag (H flag) 154 is ON (S104). When the home agent flag 154 is not ON (is OFF), the information setting unit 16 returns to step S103 and starts the processing for the next entry until no unprocessed entry is left.

When the home agent flag (the H flag) 154 is 'ON' in step S104, the information setting unit 16 judges whether the entry shall be selected (S105). For example, the information setting unit 16 judges whether the entry has a higher preference (see the home agent preference 155 of the router list 150) with respect to the home agent 50 selected above. When the entry not selected, the information setting unit 16 returns to step S103 and starts the processing for the next entry until there are no more unprocessed entries.

On the other hand, when the entry is selected, the information setting unit 16 sets the IP address 152 of the entry in the information memory unit 15 as the IP address of the home agent. The information memory unit 15 enters the information in the memory area managed by the information memory unit 15 (S106). Moreover, the information setting unit 16 sets the prefix 153 of the entry and an IP address of the mobile terminal 10 generated from the prefix 153 in the information memory unit 15 as the home link prefix and the home address, respectively. The information memory unit 15 enters this information in the memory area it manages (S107).

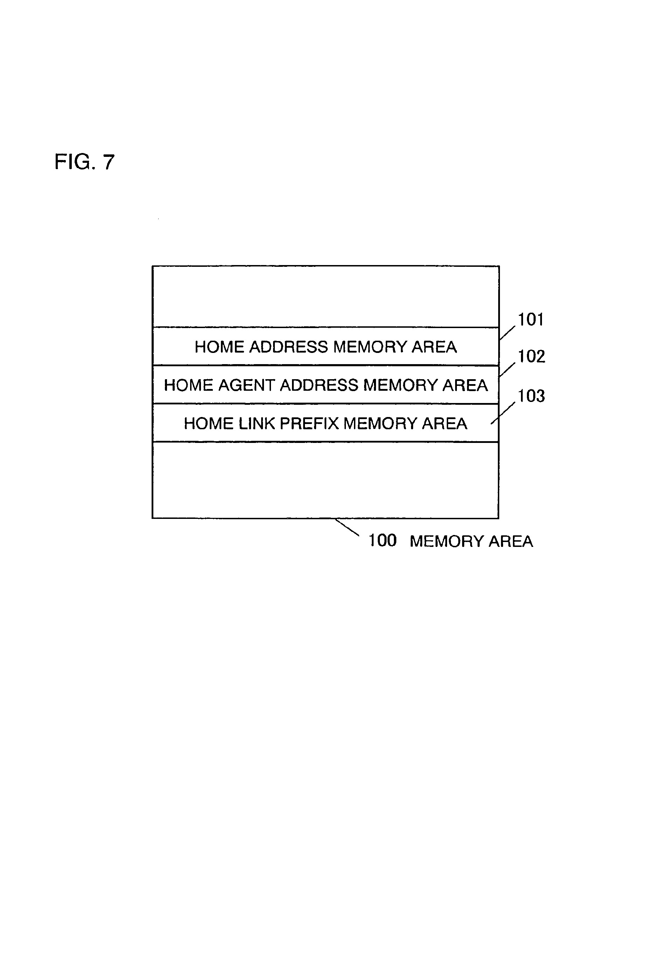

The memory area managed by the information memory unit 15 is shown in Fig. 7. In Fig. 7, a home address is stored in a home address memory area 101, an IP address of a home agent is stored in a home agent address memory area 102, and a prefix of a home link is stored in a home link prefix memory area 103.

The information setting unit 16 increments the variable Count_HA for managing the number of registered home agents (S108) and judges whether the number of registered home agents has reached an upper limit of the number of home agents to be selected (S109). When the number of registered home agents has not reached the upper limit, the information setting unit 16 returns to step S103 and starts the processing for the next entry. However, when there is no next entry, the information setting unit 16 displays completion of the setting processing on the interface 18 (S120) and transitions to the trigger waiting state in step S101. On the other hand, when the number of registered home agents has reached the upper limit, the information setting unit 16 transitions to step S120. It is assumed that the upper limit value of the number of home agents is not necessarily equal to the total number of home agents on the link. Note that step S120 for displaying completion of setting may be omitted.

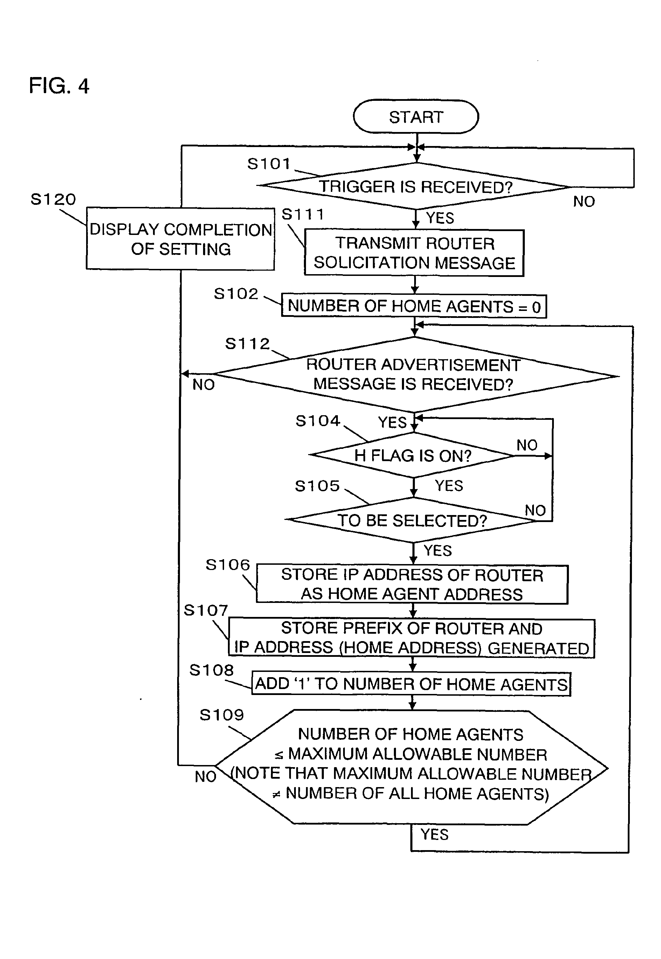

Instead of performing the information setting for the home agents 50 registered in the router list 150, it is also possible to transmit a router solicitation message to the link 1 to which the mobile terminal 10 is connected, requesting router information, and perform the information setting on the basis of the real-time information in the router advertisement message responding to the router solicitation message. Processing in that case will be hereinafter explained using Fig. 4.

First, when the information setting unit 16 receives a trigger indicating setting timing from the user judgment acquiring unit 17 (S101), the information setting unit 16 requests the L3 processing unit 12 to transmit one or more router solicitation messages. The L3 processing unit 12 transmits the router solicitation messages via the L1/2 processing unit 11 connected to the link 1 (S111). Note that the L3 processing unit 12 may transmit the router solicitation messages to all links to which the mobile terminal 10 is connected, via all L1/2 processing units.

The information setting unit 16 initializes the variable Count_HA for managing the number of home agents with a value '0' (S102).

When the L3 processing unit 12 receives the router advertisement message 200, the L3 processing unit 12 updates the router list 150 and notifies the information setting unit 16 of the update (S112).

The information setting unit 16 applies the processing in steps S104 to S108 shown in Fig. 3 to the router advertisement message 200 received. Subsequently, the information setting unit 16 judges whether the number of registered home agents has reached the upper limit of the number of home agents to be selected (S109). When the number of registered home agents has not reached the upper limit, the information setting unit 16 returns to step S112 and checks for reception of the next router advertisement message. If there is no subsequent router advertisement message, the information setting unit 16 displays completion of the setting processing on the user interface 18 (S120) and transitions to the trigger waiting state in step S101. On the other hand, when the number of registered home agents has reached the upper limit, the information setting unit 16 transitions to step S120. It is assumed that the upper limit value of the number of home agents is not necessarily equal to the total number of home agents on the link.

Note that, when the information setting unit 16 receives the router advertisement message 200, the L3 processing unit 12 updates the router list 150. Thus, the information setting unit 16 can apply the processing in steps S104 to S108 to all entries in the router list 150.

In step S105, it is also possible that the candidate home agents are presented to the user interface 18 via the user judgment acquiring unit, and that the information setting unit 16 selects the home agent designated by the user. Since this makes it possible for information setting unit 16 to select the home agent designated by the user, it is possible to perform communication under conditions suited to the particular data.

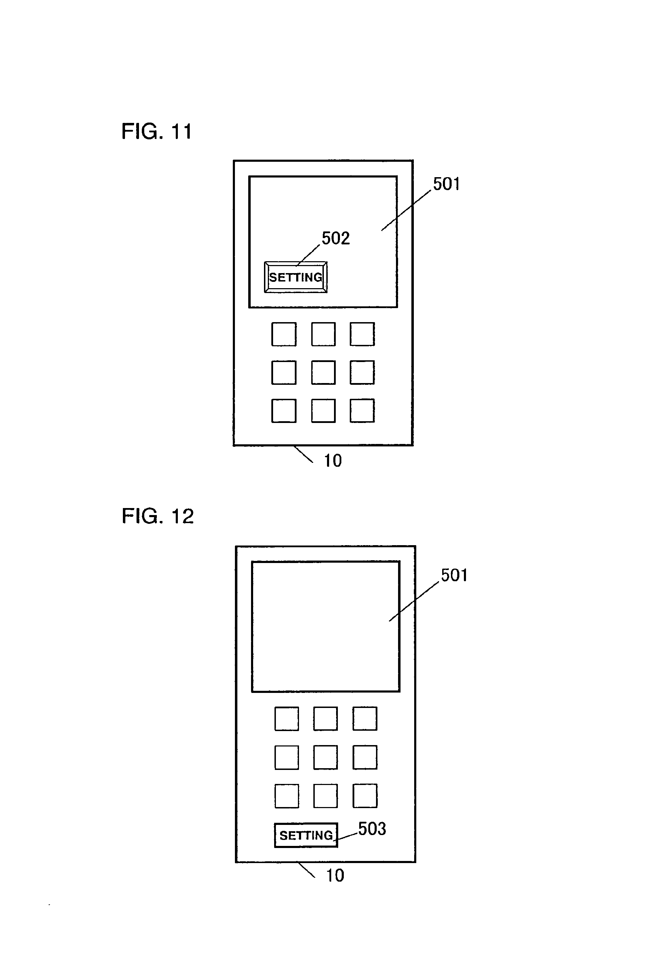

A specific form of the user interface 18 with which a user gives setting timing to the mobile terminal 10 will be explained using Figs. 11 to 13.

Fig. 11 shows a first user interface included in the mobile terminal 10 according to the invention. A display 501 and a setting button 502 which is a soft key displayed on the display unit 501 comprise the user interface 18.

In Fig. 11, the user selects the setting button 502 to thereby instruct setting timing. The user judgment acquiring unit 17 detects the setting timing and notifies the information setting unit 16 of the setting timing. When information setting is completed, a notice is displayed on the display unit 501.

Fig. 12 shows a second user interface included in the mobile terminal 10 according to the invention. The display unit 501 and a setting button 503 comprise the user interface 18.

In Fig. 12, the user depresses the setting button 503 to thereby specify setting timing. The user judgment acquiring unit 17 detects the setting timing and notifies the information setting unit 16 of the setting timing. When information setting is completed, a notice is displayed on the display unit 501.

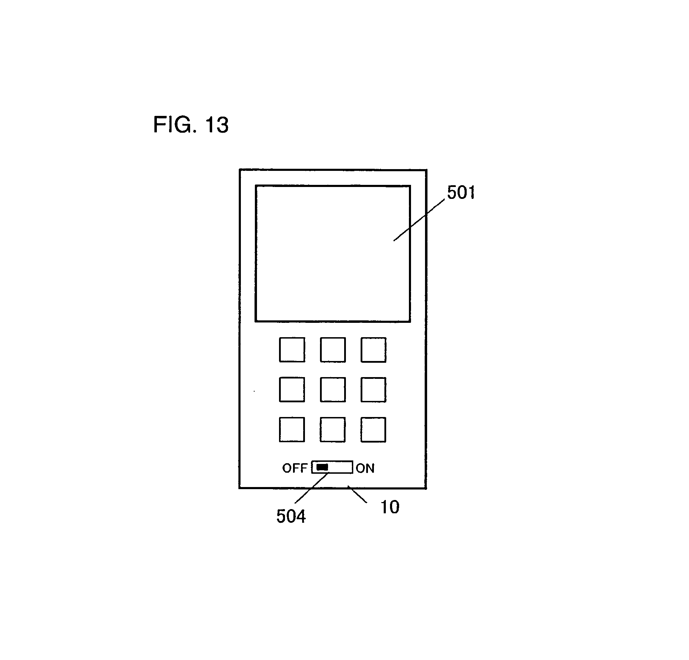

Fig. 13 shows a third user interface included in the mobile terminal 10 according to the invention. A setting switch 504 is the user interface 18.

In Fig. 13, the user transitions the setting switch 504 to an state 'ON' to thereby instruct setting timing. The user judgment acquiring unit 17 detects the setting timing and notifies the information setting unit 16 of the setting timing. When information setting is completed, a notice is displayed on the display unit 501. Note that the user may transition the setting switch 504 to an state 'OFF' to thereby specify setting timing.

The setting of a home agent carried out by the information setting unit 16 may be limited to be performed only in the period in which the setting button 503 is selected, the period in which the setting button 504 is depressed, or the period in which the setting switch 504 is transitioned to either the state 'ON' or 'OFF'.

Moreover, the display for notifying completion of information setting may be performed on a section other than the display unit 501. For example, completion of information setting may be displayed by turning-on, flashing, turning-off, and the like of a not-shown indicator.

Note that, other than acquiring a trigger from the user interface 18, the user judgment acquiring unit 17 may acquire a trigger from a not-shown processing unit that controls the entire mobile terminal 10. For example, the user judgment acquiring unit 17 may carry out the setting method explained above on receiving a trigger which norifies a new connection of the mobile terminal 10 to the link 1 has been connected.

Next, an operation for setting home agent information, which is performed when the mobile terminal 10 acquires home agent information according to the DHCP or the like from a network to which the mobile terminal 10 is connected, will be explained.

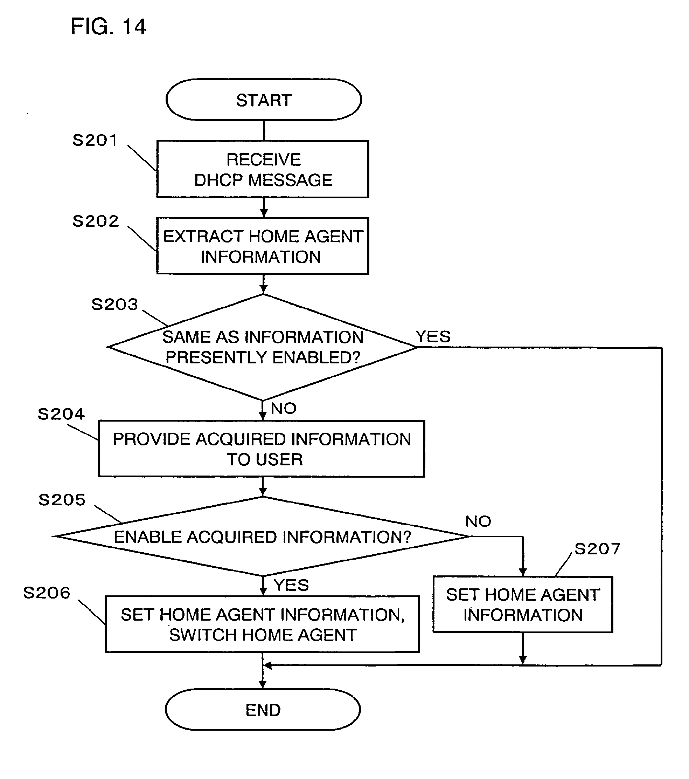

Fig. 14 is a flowchart of the processing for setting home agent information.

In Fig. 14, when the L3 processing unit 12 acquires a DHCP message (S201), the L3 processing unit 12 transfers the DHCP message to the information setting unit 16 after carrying out the processing that should conventionally be applied to the DHCP message. The information setting unit 16 extracts home agent information described in the DHCP message (S202).

Subsequently, the information setting unit 16 judges whether the home agent information acquired is the same as the home agent information which is set in the information memory unit 15 presently and which is used for mobile IP protocol processing; that is, information of the valid home agent (S203). When the acquired home agent information is the same as the valid home agent information, the information setting unit 16 ends the processing. In the comparison of the home agent information, the information setting unit 16 may judge that the pieces of home agent information are identical when addresses of home agents thereof coincide with each other and home link prefixes thereof coincide with each other. Alternatively, the information setting unit 16 may judge whether the pieces of home agent information are identical taking into account other kinds of information.

On the other hand, when it is judged that the acquired home agent information is different from the valid home agent information, the information setting unit 16 transfers the acquired information to the user judgment acquiring unit 17. The user judgment acquiring unit 17 displays the acquired information on the user interface 18 (S204).

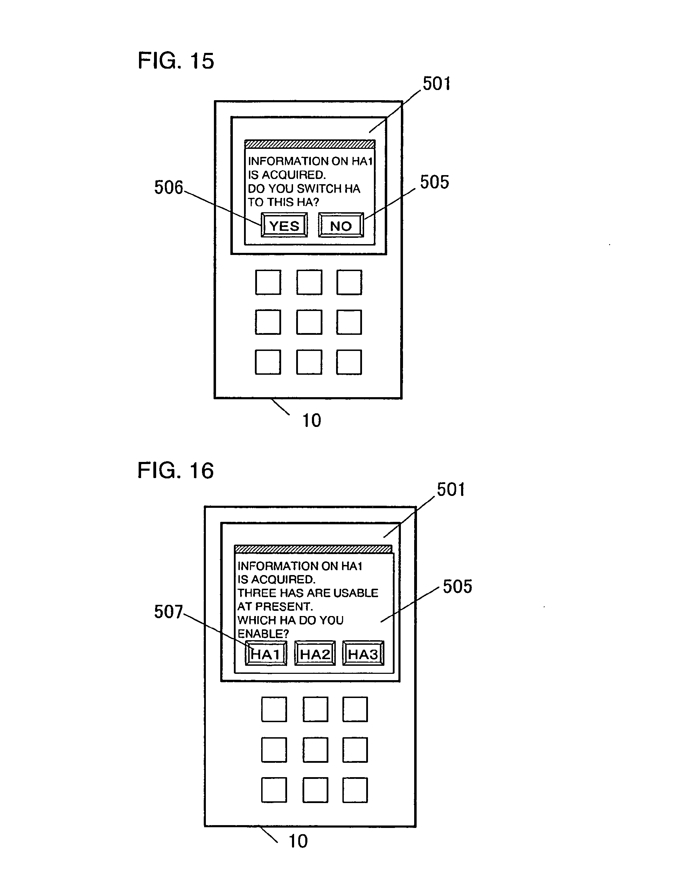

The user interface unit 18 can present the acquired information to the user with, for example, user interfaces shown in Figs. 15 and 16. In Fig. 15, on a terminal screen having the display unit 501, the user interface unit 18 indicates, with a dialog 505, that home agent information different from home agent information already set and validated is acquired and suggests that the user judge whether to switch to a new home agent.

When the user inputs user judgment by pressing a button 506 of "YES" or "NO", the user judgment acquiring unit 17 acquires the user judgment. The user judgment acquiring unit 17 checks whether the user input is "YES", that is, whether the user judgment acquiring unit 17 is given a command to switch to a new home agent from the user interface unit 18 (S205). When the user judgment acquiring unit 17 is commanded to switch (the user input is "YES"), the user judgment acquiring unit 17 notifies the information setting unit 16 of the user input. In response to this, the information setting unit 16 sets the acquired information in the information memory unit 15, whereby the home agent is switched (S206). After this, the mobile IP processing unit 14 executes mobile IP processing using the set information.

On the other hand, when the user inputs "NO" and the user judgment acquiring unit 17 is notified that the acquired information is not to be used, the user judgment acquiring unit 17 also notifies the information setting unit 16 of that effect. However, although the information setting unit 16 stores the acquired information in the information memory unit 15 (S207) , the information setting unit 16 ends the processing without switching the home agent. This is for the purpose of using the home agent information for later operations.

Further, as indicated by a terminal display image shown in Fig. 16, in step S205, the information setting unit 16 acquires all pieces of home agent information held by the information memory unit 15 already and presents, using a dialog 505, the home agent information to the user together with home agent information acquired anew. The user can also select a desired home agent by pressing any one of buttons 507. In this case, when the user judgment acquiring unit 17 acquires a result of the selection by the user, the user judgment acquiring unit 17 notifies the information setting unit 16 of the result. When the home agent selected is a new home agent, the information setting unit 16 sets the acquired home agent information in the information memory unit 15. When the home agent selected by the user is a home agent already held by the information memory unit 15, the information setting unit 16 designates the information (S206).

Note that the user may be allowed to select plural home agents on the dialog so that the user can select plural home agents. In this case, it is also possible to constitute a mobile terminal such that an application selects the transmission source address, that is, the home address, by which to perform communication, and the home agent is selected without intervention of user judgment.

In this way, the user can select not only a home agent provided from a network but alternatively can select a different home agent appropriate at a particular time and thus be served by that home agent. For example, when the user performs business communication at the time of a business trip, the user can select a home agent at the user's office and thus be served by that home agent. When the user performs private mail transmission or Web access, the user can select a home agent of an ISP and thus be served by that home agent. This makes it possible to prevent a mobile terminal from automatically setting a home agent and transmitting confidential data without encrypting the confidential data. Thus, the user can use the mobile terminal to transmit important data while keeping confidentiality through an encryption path and transmit other data at high speed. In this way, it is possible to use a home agent suitable for the situation of the user or the application. Thus, it is possible to improve convenience of the mobile terminal.

When, for example, a home agent is set in a small network environment such as a home network, the DHCP does not provide home agent information in some cases. At this time, a mobile terminal can extract information concerning home agents located on the link from a router advertisement message and, then, select and set a home agent, to which the mobile terminal belongs, from among the home agents. Moreover, at this time, the mobile terminal collects home agent information from the router advertisement message only when a trigger from the user is inputted. This makes it possible to prevent a waste of resources of the mobile terminal compared with the case in which home agent information is collected steadily.

As described above, according to this embodiment, when the mobile terminal acquires home agent information such as an address of a home agent, which is basic information for activating mobile IP protocol processing, the mobile IP protocol processing using the home agent information acquired starts upon an instruction of the user. This makes it possible to perform communication that satisfies requirements desired by the user or the application. In addition, since the mobile terminal automatically acquires home agent information on a link with timing specified by the user, the work burden on the user for making settings is reduced and convenience is improved.

### Industrial Applicability

As described above, the invention is useful for a mobile terminal or the like in which a mobile IP protocol is operable. The invention is suitable for setting of the home agent information which is indispensable for continuing communication, even if the mobile terminal or the like move on the Internet.

### LIST OF REFERENCE NUMERALS IN DRAWINGS

- 1:: LINK
- 2:: NETWORK
- 10:: MOBILE TERMINAL
- 11, 19:: L1/2 PROCESSING UNIT
- 12:: L3 PROCESSING UNIT
- 13:: HIGHER LAYER PROCESSING UNIT
- 14:: MOBILE IP PROCESSING UNIT
- 15:: INFORMATION MEMORY UNIT
- 16:: INFORMATION SETTING UNIT
- 17:: USER JUDGMENT ACQUIRING UNIT
- 18:: USER INTERFACE UNIT
- 50:: HOME AGENT
- 60:: ROUTER
- 501:: DISPLAY UNIT
- 502:: SETTING BUTTON
- 503:: SETTING BUTTON
- 504:: SETTING SWITCH
- 505:: DIALOG
- 506,: 507: BUTTON

## Claims

1. An address information setting method comprising:
a step of detecting a trigger from a user;
a step of selecting a home agent to manage a mobile terminal from among routers to which the mobile terminal is connected, when the trigger is detected;
a step of generating a home address from the prefix distributed by the home agent selected; and
a step of carrying out a mobile IP procedure using the selected home agent and the generated home address.

2. An address information setting method according to claim 1, further comprising a step of acquiring router information from a network to which the mobile terminal is connected, when the trigger is detected.

3. An address information setting method according to claim 1 or 2,
wherein in the selection of a home agent, a home agent is selected from among routers whose flag indicating that it is a home agent is on, this flag included in acquired information regarding the routers.

4. An address information setting method according to claim 3,
wherein in the selection of a home agent, from among the routers whose flag is on, a predetermined number of routers are selected according to a preference defined in advance, in order from the one with highest priority.

5. An address information setting method according to claim 3,
wherein in the selection step of a home agent, a home agent is selected arbitrarily from among the routers whose flag is on.

6. An address information setting method according to claim 3, further comprising a step of acquiring, from the user, criteria for selecting a home agent from among the routers whose flag is on,
wherein in the step of selecting a home agent, a home agent is selected according to the criteria.

7. An address information setting method according to any one of claims 1 to 6, further comprising a step of notifying the user when the selection of a home agent is completed.

8. An address information setting method according to claim 2,
wherein the selection of a home agent is performed using router information acquired during a time period designated by the user.

9. A mobile terminal comprising:
an input unit through which a user inputs a trigger for setting information regarding a home agent;
an information setting unit that selects a home agent to manage the mobile terminal from among the routers to which the mobile terminal is connected when the mobile terminal receives the trigger, and sets the address of the home agent and a home address which is generated from the prefix distributed by the home agent as information regarding the home agent; and
mobile IP processing means that carries out a mobile IP procedure using the information regarding the home agent.

10. A mobile terminal according to claim 9, further comprising:
a transmitting unit that transmits a router information request message for requesting router information from a network to which the mobile terminal is connected, when a trigger from the input unit is received; and
a receiving unit that receives router information response messages that are responses to the router information request message,
wherein the information setting unit selects a home agent to manage the mobile terminal from among the routers that have transmitted the router information response messages.

11. A mobile terminal according to claim 9 or 10, wherein the information setting unit selects a home agent from among routers whose flag indicating that the home agent is included in the router information of the router information response messages is on.

12. A mobile terminal according to claim 11,
wherein in the selection of a home agent, from among the routers whose flag is on, a predetermined number of routers are selected according to a preference defined in advance, in order from the one with highest priority.

13. A mobile terminal according to claim 11,
wherein the information setting unit selects a home agent arbitrarily from among the routers whose flag is on.

14. A mobile terminal according to claim 11,
wherein through an input unit the user enters selection criteria for the selection of a home agent to be performed by the information setting unit, and
the information setting unit performs the selection of a home agent on the basis of these criteria.

15. A mobile terminal according to any one of claims 9 to 13,
wherein the input unit may be a soft key on a screen, a button set in a main body, or a switch set in the main body.

16. A mobile terminal according to any one of claims 9 to 15, further comprising a display unit that notifies the user that the setting of information regarding a home agent is completed.

17. A mobile terminal according to any one of claims 9 to 14,
wherein the input unit designates the time period in which the information regarding a home agent is set, and
the information setting unit sets the information only in this period.

18. A mobile terminal according to claim 15,
wherein the time period is a period in which the soft key, the button, or the switch used as the input unit is in the state 'ON'.
